Europäisches Patentamt

European Patent Office

Office européen des brevets

(11) Veröffentlichungsnummer: **0 497 424 A2**

# EUROPÄISCHE PATENTANMELDUNG

(21) Anmeldenummer: **92200238.1**

(22) Anmeldetag: **22.01.92**

(51) Int. Cl.5: **H04B 1/16**

(30) Priorität: **31.01.91 DE 4102859**

(43) Veröffentlichungstag der Anmeldung:
**05.08.92 Patentblatt 92/32**

(84) Benannte Vertragsstaaten:
**PT**

(71) Anmelder: **Deutsche Thomson-Brandt GmbH
Hermann-Schwer-Strasse 3 Postfach 1307
W-7730 Villingen-Schwenningen(DE)**

(72) Erfinder: **Macaree, John Patrick
5 Green Meadows
Danbury, Essex CM3 4LD(GB)**

(54) **Rundfunkempfänger mit einem NICAM- oder DAB-Decoder.**

(57) 2.1. Die Erfindung betrifft einen Rundfunkempfänger mit einem PSK-Demodulator (17) und einer A.G.C-Schaltung (1) zur automatischen Verstärkungsregelung. Der Erfindung liegt die Aufgabe zugrunde, bei einem Rundfunkempfänger dieser Art beim Empfang eines modulierten digitalen Audiosignals ein qualitativ hochwertiges Audio-Signal an den Rundfunk-Lautsprechern zur Verfügung zu stellen.

2.2. Gemäß der Erfindung weist der Rundfunkempfänger eine A.G.C.-Schaltung (1) und einen PSK-Demodulator (17) zur Demodulation eines DAB-oder NICAM codierten und modulierten Audio-Signalsauf, wobei der Demodulator in der Regel Teil eines DAB- oder NICAM-Decoders (16) ist und wobei die A.G.C.-Schaltung im Weg des DAB- oder NICAM-Signals angeordnet ist, und eine Regelspannungsgröße für die Verstärkungsregelung an einem Ausgang des Demodulators ableitbar ist. Vorzugsweise bilden die Signale an den I und Q-Ausgängen des Demodulationsfilters des QPSK-Demodulators die Regelspannungsgrößen.

2.3. Rundfunkempfänger bzw. Fernsehempfänger mit DAB- oder NICAM-Decoder

Fig. 5

NICAM (Near Instantaneous Companded Audio Multiplex) ist ein digitales Tonübertragungsverfahren, daß den Fernsehton mit hoher Qualität und Zuverlässigkeit Stereofon überträgt. Dieses Verfahren wird ausfürlich beschrieben in: "NICAM Digital Stereo", Electronics and Wireless World; August und September 89; "NICAM 3 Near-Instantaneously Companded digital transmission system for high quality sound programmes; The radio and electronics ingeneer, Vol.50; British Broadcasting Corporation: Specification of a Standart for UK Stereowith-Television Transmissions, September 1986.

DAB ( = Digital Audio Broadcasting, "DAB" ist ein Warenzeichen der TELEFUNKEN Fernseh und Rundfunk GmbH) ist eine Kurzbezeichnung für den digitalen terrestrischen Hörfunk, der im Rahmen des europäischen Forschungsvorhabens EUREKA 147-DAB entwickelt wird. DAB ist in Grundzügen aus "Funkschau" Heft 8, 1990, Teil: Funkschau Spezial, Seiten 9 - 18 beschrieben.

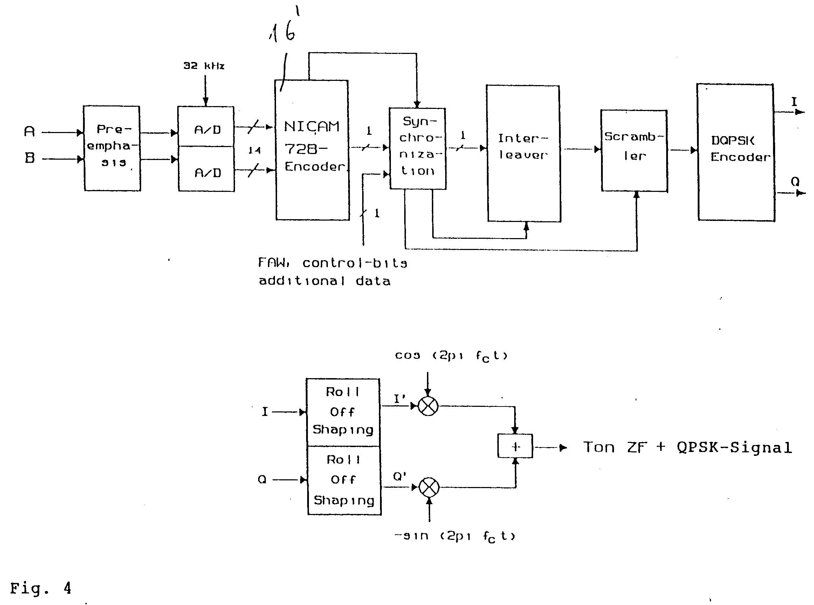

Ohne alle Einzelheiten der Systeme NICAM oder DAB aufzuzeigen, wird nachfolgend insbesondere das Modulationsverfahren des NICAM Tonträgers beschrieben, das dem bei DAB verwendeten Modulationsverfahren sehr ähnlich ist. Zur Übertragung auf einem bandbegrenzten Kanal wird sendeseitig in einem NICAM Encoder ein serieller Datenstrom mittels des Vier-Quadranten-Phasendifferenz-Modulation-(DQPSK)-Verfahrens (Differential Quadrature Phase Shift Keying) codiert und moduliert (Fig. 4). Dieses Modulationsverfahren ist ein bandbreitenbegrenztes Modulationsverfahren und bringt einen verhältnismäßig einfachen Aufbau der Demodulatoren im Rundfunk-Empfänger mit sich. Statt der speziellen DQPSK oder QPSK bezieht sich die Erfindung auf alle PSK-Modulationverfahren, also auch auf z.B. 2-PSK, 8-PSK usw., welche auch bei DAB-diskutiert werden. PSK wird nachfolgend auch als Überbegriff für die verschiedenen Formen dieser Modulationsart verwendet.

Sendeseitig werden in einem DAB-oder NICAM- bzw. DQPSK-Encoder jeweils 2 Bits des seriellen Datenstroms zu einem Dibit ( = Symbol, Baud) zusammengefaßt. Die vier Kombinationsmöglichkeiten eines Dibit (00, 01, 10, 11) resultieren in einer Drehung (Phase Shift) eines (komplexen) Zeigers um 0. -90, -270, bzw. 180 Grad.

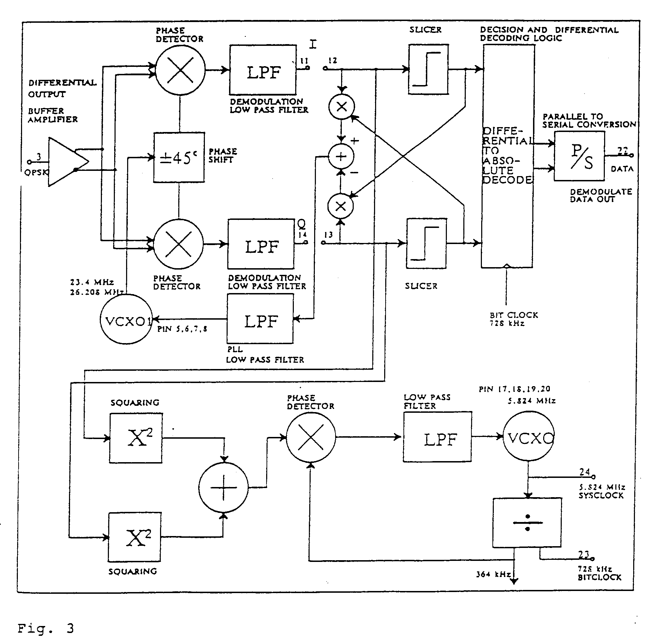

Die aktuelle Zeigerpostion wird mittels der Koordinaten I und Q (s. Fig. 3 und 4) ausgedrückt. Sie wechselt mit der Symbolrate, welche der halben Datenrate entspricht. Bei NICAM 728 mit einer Datenrate von 728 kBit ist dies 728/2 = 364 kBaud/s. Bei DAB sind je nach Verwendung unterschiedliche Datenraten vorgesehen. Im Empfänger kann der Datenstrom einem invers zum Encoder aufgebauten DAB- oder NICAM-Decoder, der einen DAB- oder NICAM-Demodulator enthält, eindeutig zurückgewonnen werden, indem man lediglich die Phasendifferenz zweier Symbolzeitpunkte ermittelt und ihr nach obiger Vorschrift ein Dibit zuordnet. Das Signalpaar I und Q wird anschließend jeweils einem Tiefpass zugeführt. Er bestimmt die Bandbreite und die spektrale Form des zu übertragenen Audiosignals im Übertragungskanal (Spectrum Shaping).

Auf der Empfängerseite wird ein möglichst identische Filter eingesetzt (Fig. 3). Die resultierende Bandbreite und ihre spektrale Form wird durch den sogenannten Roll-Off-Faktor in einer formelmäßigen Darstellung des Tiefpasses ausgedrückt. In diesem Faktor unterscheiden sich die NICAM-Systeme nach I und B/G Standart.

Im Modulator wird sendeseitig das gefilterte Signalpaar I und Q mittels Modulation mit zwei zueinander in Quadratur stehenden Trägern in die Ton-ZF-Lage gebracht. Hier kann es zum restlichen aus Bild- und FM-mono Signal bestehenden Spektrum addiert werden und deren Summe anschließend in VHF bzw. UHF-Lage gebracht werden. Im Empfänger wird in einem entsprechenden Decoder bzw. im Demodulator das Signalpaar I und Q bzw. die Tondaten wiedergewonnen.

Der Erfindung liegt die Aufgabe zugrunde, bei einem Fernsehempfänger der eingangs genannten Art, beim Empfang eines digital codierten PSK-modulierten Audiosignals eine qualitativ hochwertiges Audio-Signal an den Rundfunk-Lautsprechern zur Verfügung zu stellen.

Gemäß der Erfindung wird die Aufgabe mit einem Rundfunkempfänger mit den Merkmalen nach Anspruch 1 gelöst. Vorteilhafte Weiterbildungen sind in den Unteransprüchen beschrieben.

Mittels der Erfindung wird eine für sich bekannte Schwundregelung oder Schwundregelschaltung für den DAB- oder NICAM-Tonträger verwand, wobei die Regelspannungsgröße für den regelbaren Verstärker aus dem nPSK- oder QPSK- oder DQPSK-Demodulator gewonnen wird.

Bei der Schwundregelung in einem Fernsehempfänger ist es bekannt (DE 31 44 007.5), aus der Amplitude des Videosignals eine Regelspannung zu gewinnen und damit die Verstärkung des ZF-Verstärkers so zu regeln, daß das Videosignal eine von der Empfangsfeldstärke weitestgehend unabhängige, konstante Amplitude hat. Derartige Schwundregelschaltungen werden auch als AGC (Automatic-Gain-Control) bezeichnet. Die Regelspannung kann bekannterweise z.B. aus dem Videosignal durch Spitzengleichrichtung oder Mittelwertbildung in einem Siebglied gewonnen werden.

Vorzugsweise wird die Regelspannungsgröße aber durch die Ausgänge I und Q der Demodulationsfilter des PSK-Demodulators zur Verfügung gestellt. Dazu wird das Signalpaar Q und I einer geeigneten Schaltung im PSK-Demodulator zugeführt, an deren Ausgang die der Regelspannung entsprechenden Größen I und Q oder I exp2 und Q exp2 abgreifbar ist.

Mittels der Erfindung wird eine deutliche Tonqualität-Verbesserung erreicht, wobei durch die Rückführung des Signalpars Q und I in überraschend einfacher Weise eine effektive Lösung von Ton- Bild-problemen in einem Fernsehempfänger erreicht wird. Außerdem wirkt sich das Vorhandensein anderer möglicher Signale, insbesondere analoger Signale nicht störend auf die Verstärkungsregelung aus, so daß die gesamte Schwundregelung sehr stabil und störunanfällig ist.

Nachfolgend wird die Erfindung anhand zeichnerisch dargestellter Ausführungsbeispiele näher erläutert. In der Zechnung stellen dar:

Fig. 1    Eine Anordnung einer Schwundregelschaltung im Signalweg zum NICAM-Demodulator

Fig. 2    Eine Realisierungsmöglichkeit der Schwundregelschaltung

Fig. 3    Die interne Archtektur eines NICAM QPSK Demodulators

Fig. 4    Ein Blockschaltbild eines NICAM Encoders

Fig. 5    Ein Blockschaltbild eines Fernsehgerätes mit NICAM-Komponenten

Fig. 6    Ein Blockschaltbild eines NICAM-Decoders

Fig .7    Ein Blockschaltbild einer Schwundregelung im DAB-Signalweg

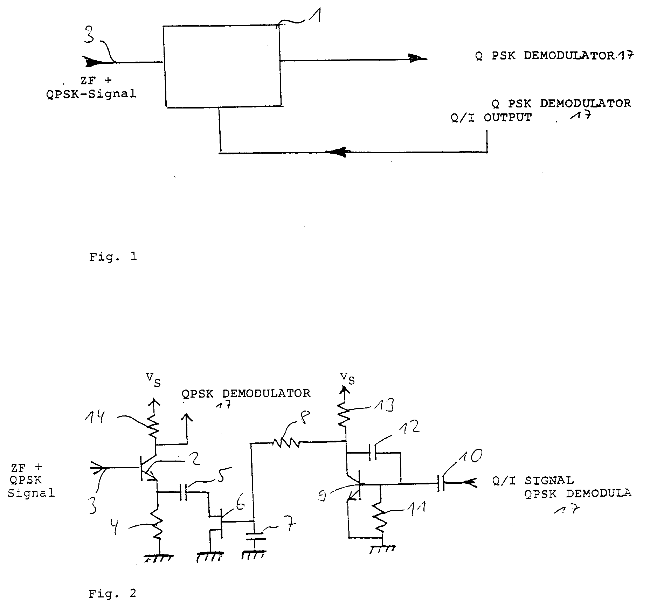

Fig. 1 zeigt ein Blockschaltbild aus einem Fernsehempfänger, bei dem im Signalweg des NICAM-Tonträgers ein regelbare Verstärkungsstufe 1 "Gain Control Stage" angeordnet ist, dessen Ausgang mit dem QPSK-Eingang eines NICAM-QPSK-Demodulator 17 (hier MAS7A101 NICAM QPSK Demodulator) verbunden ist.

Eine Realisierungsmöglichkeit der schaltbaren Verstärkungsstufe 1 nach Fig. 1 ist in Fig. 2 gezeigt. Über einen Transistor 2 wird das Zwischenfrequenzsignal 3, das die QPSK Signale Q und I vom Q/I-Ausgang des Demodulators 17 enthält, verstärkt. Diese Verstärkung wird im Sinne eines AGC geregelt. Dazu muß die Verstärkung dieser Stufe geändert werden. Dies ist durch eine Verschiebung des Arbeitspunktes der Basis eines Transistors 2 aber auch durch eine Gegenkopplung möglich. Eine Möglichkeit dazu ist es, mit dem Widerstand 4 die Gegenkopplung zu realisieren. Wenn die Gegenkopplung verändert wird wird auch die Verstärkung entsprechend geändert. Ein Kondensator 5 der wie der Widerstand 4 mit dem Emitter des Transistors 2 verbunden ist, dient ebenfalls zur Gegenkopplung, jedoch nur für hohe Frequenzen. Die hohen Frequenzen werden über einen Feldeffekttransistor 6 zugeführt, dessen Sourceelektrode mit den Kondensator 5 verbunden ist. Der Drain-Anschluß des Feldeffekttransistors ist geerdet. Der Gate-Eingang des Feldeffekttransistors ist mit einem Kondensator 7 verbunden, der ebenfalls geerdet ist. Außerdem ist die Gateelektrode über einen Widerstand 8 mit dem Emitter eines Transistors 9 verbunden.

Ist der FET stromlos, so ist der Kondensator 5 praktisch abgeklemmt vom Emitter des Transistors 2. Die Gegenkopplung dann maximal und die Verstärkung minimal. Der Kollektor des Transistors 2 ist mit einem Widerstand 14 verbunden, an dem eine Versorgungsspannung VS anliegt. Außerdem bildet der Kollektor des Transistors 2 den Ausgang der Schwundregelschaltung und ist mit dem bzw. den Eingängen des QPSK-Demodulators (Fig. 3; Pin 3, 12 und 13) verbunden. Es wird also nur für hohe Frequenzen die Gegenkopplung geändert.

Um die Signale von Q/I-Ausgang des QPSK-Demodulators entsprechendfür die Schwundregelschaltung aufzubereiten, wird das Signalpaar Q und I vom Ausgang Q (Pin 14 in Fig. 3) und I (Pin 11 in Fig. 3) des NICAM QPSK Demodulators 17 zuerst einem Kondensator 10, wie in Fig. 2 gezeigt, zugeführt. Der Kondensator ist mit der Basis des Transistors 9, mit einem Widerstand 11 und einem weiteren Kondensator 12 verbunden. Der Widerstand 11 ist geerdet ebenso wie der Emitter des Transistors 9. Der Kollektor des Transistors 9 ist mit dem Kondensator 12, mit dem Widerstand 8 und einem weiteren Widerstand 13 verbunden, an dem die Versorgungsspannung VS anliegt.

Wie das Signalpaar Q und I im QPSK-Demodulator gewonnen wird, zeigt die Fig. 3. Diese zeigt zeigt die interne Architektur eines NICAM-QPSK-Demodulators 17, hier MAS7A101. Der QPSK Subcarrier-Demodulator nach Fig. 3 besteht aus einem Eingangs-Verstärker mit zwei Ausgängen, einem Switch-Type Vervielfacher, einem spannungsgesteuerte Kristalloszillator und einem 90° Phasen(ver)schieber. Der Kristalloszillator schwingt auf der vierfachen QPSK-Ziwschenträgerfrequenz z.B. 26.408 MHz im System I und 23.4 MHz im System B/G-Systeme (z.B. Deutschland, Skandinavien).

Die demodulierten Daten werden einem Nyquist-Filter zugeführt, der eine 100 % Roll-Off-Antwort bei einem System B und G vorsieht. Nach Phasendedektierung und Tiefpassfilterung steht das Signalpaar Q und I an den Ausgängen 11 und 14 des Demodulators an. Die Ausgängewerte von Q und I oder $Q^2$ und $I^2$ sind wie oben beschrieben zur automatischen Verstärkungsregelung 1 auf den Eingang einer entsprechenden Schwundregelschaltung wie in Fig. 2 gezeigt, zurückgeführt. Die gleichen Daten gehen auch über die Eingänge 12 und 13 in den Entscheidungs- und Bit-clock Rückgewinnungsblock des Demodulators nach Fig. 3.

Fig. 4 zeigt einen sendeseitigen NICAM Encoder. Zur Signalrückgewinnung ist im Rundfunkempfänger ein entsprechender NICAM-Decoder 16 vorgesehen, der z.B. den NICAM QPSK-Demodulator nach Fig. 3 enthält oder diesem nachgeschaltet ist.

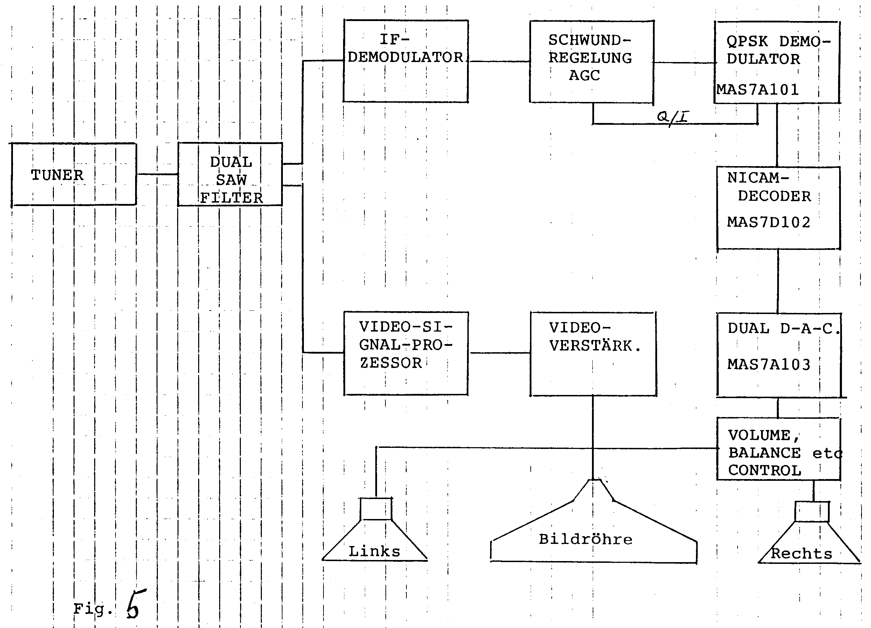

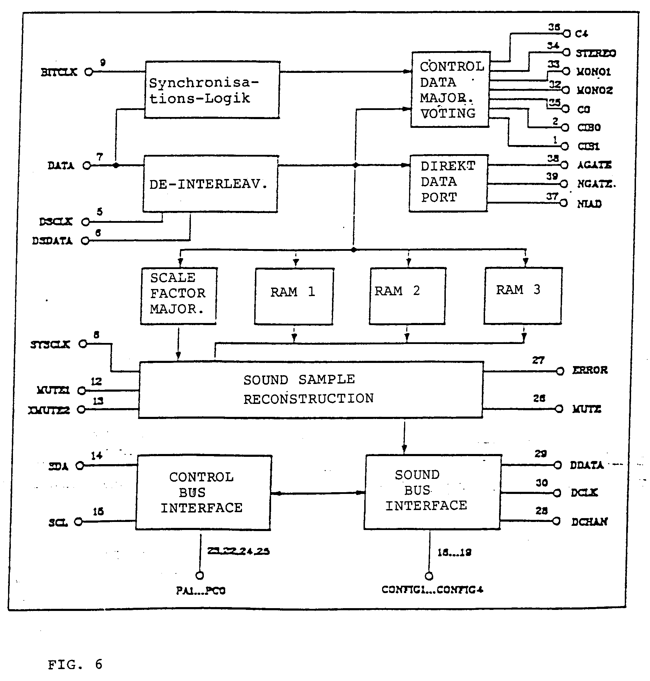

Fig. 5 zeigt ein Gesamtblockschaltbild eines Fernsehgerätes mit NICAM-Komponenten. Die in einem NICAM-System verwendeten Hilfsträger werden im Tuner- und IF-Demodulatorteil eines Fernsegrätes regeniert. Das Hilfsträgersignal wird dann auf das NICAM-Modul geschaltet, das für die drei Funktionen QPSK-Demodulation, NICAM-Decodierung und D-A-Wandlung verantwortlich ist. Im Demodulatorblock 17 (MAS7A101) wird der derielle Bit-Strom vom modulierten Trägersignal getrennt. Je nach Frequenz werden dazu verschiedene Demodulationsfilter eingesetzt. Von FM-Signalen und Bildträgern verursachtes Rauschen sowie die Anzahl der möglichen Bit-Fehler hängt eintscheident von der Qualität des Filteraufbaus ab. Der demodulierte Datenstrom gelangt im Anschluß an die Filterung auf den NICAM-Decoder (16) MAS7D102, der genau die umgekehrte Funktion wie der Transmitter bzw. Encoder ausführt. Den inneren Aufbau des NICAM-Decoders MAS7D102 zeigt Fig. 6. Die decodierten Daten vom Decoder gelangen zu einem an den Decoder angepaßten Wandler 18 (MAS7A103), der die D-A-Wandlung vornimmt. Alle drei spezifischen NICAM-Bausteine 16, 17 und 18 können auch zusammen mit der AGC-Regelschaltung 1 zusammen in einem Baustein intergriert werden.

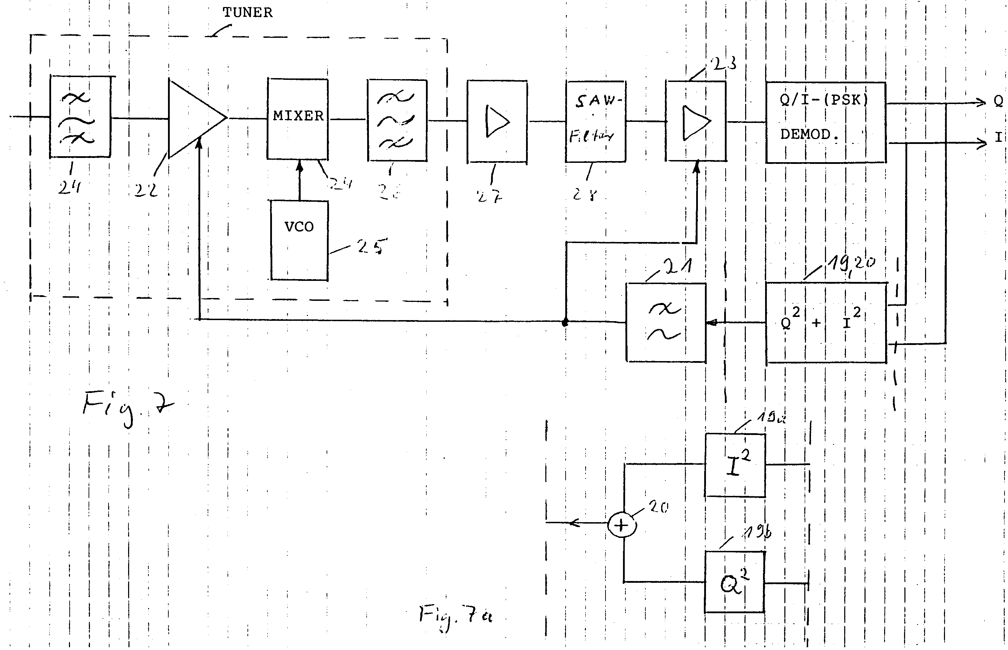

Fig. 7 zeigt die erfindungsgemäße Schwundregelung für eine Anwendung in einem DAB-Empfänger, bei dem die Signale vom I- und Q-Ausgang des QPSK-Demodulators 17 zunächst je einem Quadrierer 19a und 19b, anschließend einem Addierer 20 und danach einem Tiefpass 21 zugeführt werden. Mit der so gewonnenen Regelspannung ($I^2$ + $Q^2$) wird dann eine zweifache oder zweistufige Schwundregelung durchgeführt, wobei die erste AGC-Stufe 22 der Schwundregelung im Tuner und die zweite AGC-Stufe 23 ähnlich wie bei vorstehend beschriebenen NICAM-Beispiel zwischen dem Tuner und dem Demodulator vorgesehen ist.

Die dem Tuner zugeführten digitalen Rundfunksignale werden zunächst einem Bandpaß 23 zugeführt und dann unter Berücksichtigung der Regelspannungsgröße $I^2$ + $Q^2$ in einem Verstärker 22, der ersten AGC-Stufe, verstärkt. Vom Ausgang des Verstärkers 22 wird das verstärkte Signal auf einen Eingang eines Mischers 24 geführt, der seinerseits durch eine VCO 25 (Voltage Controlled Oszillator) gesteuert wird. Das Ausgangssignal des Mischers 24 wird nachfolgend nacheinander in einem weiteren Bandpass 26, einem Verstärker 27 und einem SAW-Filter 27 (Service Acustic Wave - Oberflächenfilter) und dann der zweiten AGC-Stufe 23 zugeführt. Der Ausgang der zweiten AGC-Stufe ist mit dem Dateneingang des PSK-Demodulators verbunden.

Statt der beiden Quaddrierer 19a und 19b und dem Addierer 20 kann auch eine einzige Schaltung 19,20 vorgesehen werden, die die Funktion der Quaddrierer 19a, 19b und des Addierers 20 (siehe Fig. 7a) übernimmt.

**Patentansprüche**

1. Rundfunkempfänger mit einer Schaltung (1) zur automatischen Verstärkungsregelung (Schwundregelschaltung), mit einem Decoder (16) zur Decodierung eines DAB- (Digital Audio Broadcasting) oder NICAM -(Near Instantaneous Companded Audio Multiplex) codierten Audiosignals, einem Demodulator (17) zur Demodulation eines PSK-(Phase Shift Keying) oder QPSK-(Quadrature-PSK) oder DQPSK-(Differntial-QPSK) modulierten Audiosignals, **dadurch gekennzeichnet**, daß die Schaltung (1) zur Verstärkungsrelung im Signalweg des digital codierten Audiosignals vor dem Demodulator (17) angeordnet ist (Fig. 5), und eine Regelspannungsgröße für die Verstärkungsregelung an einem oder mehreren Ausgang oder Ausgängen (Q/I) des Demodulators ableitbar ist.

2. Rundfunkempfänger nach Anspruch 1, **dadurch gekennzeichnet**, daß der Demodulator (17) Ausgänge Q und I aufweist, an denen ein Signalpaar Q und I zur Verfügung steht, das die aktuelle Zeigerposition des PSK-modulierten Audiosignals anzeigt, daß aus dem Signalpaar Q und I die Regelspannungsgröße gewinnbar ist.

3. Rundfunkempfänger nach Anspruch 1 und/oder 2, **dadurch gekennzeichnet**, daß die Schaltung (1) zur automatischen Verstärkungsregelung einen ersten Eingang (3) aufweist, dem der Zwischenfrequenzträger mit dem PSK-modulierten Audiosignal zuführbar ist, und einen Ausgang aufweist, der mit dem PSK-Eingang des PSK-Demodulators (17) verbunden ist, und einen zweiten Eingang aufweist, der mit den Q/I-Ausgängen des PSK-Demodulators (17) verbunden ist.

4. Rundfunkempfänger nach einen der vorhergehenden Ansprüche, **dadurch gekennzeichnet**, daß die Schaltung (1, Fig. 2) zur Verstärkungsregelung besteht aus einem Eingang (3) (Zwischenfrequenzträger + QPSK-Eingang), der mit der Basis eines Transistors (2) verbunden ist, dessen Kollektor mit einem Widerstand (14) verbunden ist, an dem eine Versorgungsspannung (VS) anliegt, wobei der Kollektor des Transistors (2) und den Ausgang der Verstärkungsregelschaltung bildet und vorzugsweise mit dem QPSK-Eingang des QPSK-Demodulators verbunden ist, und wobei der Emitter des Transistors (2) mit einem Widerstand 4 verbunden ist, der auf Masse liegt und mit einem Kondensator (5) verbunden ist, der mit der Source-Elektrode eines Feldeffekttransistors (6) verbunden ist, dessen Drain-Elektrode auf Masse liegt und dessen Gate-Elektrode mit eine Kondensator (7) verbunden ist, der auf Masse liegt und mit einem Widerstand (8) verbunden ist, der mit dem Kollektor eines weiteren Transistors (9) verbunden ist, wobei der Kollektor mit einem Widerstand (13) verbunden ist, der an der Versorgungsspannung (VS) liegt, und wobei der Kollektor mit einem Kondensator (12) verbunden ist, der mit der Basis des Transistors (9) verbunden, und wobei die Basis mit einem Widerstand (11) verbunden ist, der wie der Emitter des Kollektors (9) auf Masse liegt und die Basis mit einem Kondensator (10) verbunden ist, dem das Signalpaar Q und I von den Q/I-Ausgängen des QPSK Demodulators (17) zuführbar ist.

5.  Rundfunkempfänger nach einem der vorhergehenden Ansprüche, **dadurch gekennzeichnet**, daß zwischen den Q/I-Ausgängen des Demodulators (17) und der Schaltung (1, 22, 23) zur Verstärkungsregelung für jeden Ausgang (Q/I) jeweils ein Quadrierer (19a, 19b, 19) angeordnet (Fig. 7, 7a) ist, daß die Ausgänge der Quadrierer mit einem Eingang eines Addierers (20) verbunden sind, und daß das Ausgangssignal des Addierers vorzugsweise einem Tiefpassfilter (21) und erst dann der Schwundregelschaltung (1, 22, 23) zugeführt wird.

6.  Rundfunkempfänger nach einem der vorhergehenden Ansprüche, **dadurch gekennzeichnet**, daß eine weitere Schwundregelschaltung (22) in der Abstimmeinheit oder Tuner vorgesehen ist.

Fig. 1

Fig. 2

Fig. 3

7

Fig. 4

Fig. 5

FIG. 6

Fig. 7

Fig. 7a

EP 0 497 424 A2